# EUROPÄISCHE PATENTSCHRIFT

(11) **EP 2 848 849 B1**
(45) Veröffentlichungstag und Bekanntmachung des Hinweises auf die Patenterteilung: **07.04.2021**
(21) Anmeldenummer: 14175176.8
(22) Anmeldetag: 01.07.2014
(51) Int. Cl.: F16L 11/08, B32B 1/08, F16L 11/10

(54) **Schlauchleitung**
Hose line
Conduite en tuyaux flexibles

(30) Priorität: 17.07.2013 DE 202013103183 U
(43) Veröffentlichungstag der Anmeldung: 18.03.2015
(73) Patentinhaber: REHAU AG + Co, 95111 Rehau (DE)
(72) Erfinder: Wazlawik, Klaus, 95030 Hof (DE); Zahn, Cornelia, 08529 Plauen (DE); Kucsera, Renata, 48653 Coesfeld (DE)

(56) Entgegenhaltungen:
- EP-B1- 2 032 352
- US-A1- 2013 131 647

## Beschreibung

Die Erfindung betrifft die Verwendung einer Schlauchleitung zum Transport von Trinkwasser einer Innenschicht, deren innere Oberfläche einen freien Querschnitt für den Transport eines zu führenden Fluids begrenzt, wobei mindestens eine Schicht vorgesehen ist, die ein thermoplastisches Elastomer mit einer thermoplastischen Komponente und einer elastomeren Komponente enthält. Derartige Schlauchleitungen sind im Stand der Technik bekannt und dienen beispielsweise zum Transport von Wasser zur Bewässerung von Gärten.

Schläuche für Trinkwasser wurden früher aus Weich-PVC oder Gummimaterialien hergestellt. Seit geraumer Zeit kommen jedoch spezielle Polyolefin-Materialien bzw. spezielle thermoplastische Elastomere (TPE) zum Einsatz, z.B. thermoplastische Elastomere auf Styrolbasis (TPE-S). Es können weitere Rezepturkomponenten vorgesehen sein, sowie ggf. Füllstoffe und Stabilisatoren, um die Anforderungen der von der Deutschen Trinkwasserverordnung als "allgemein anerkannte Regeln der Technik" abzuleitenden Hygienestandards "technische Regel Arbeitsblatt W 270" des DVGW, sowie "Leitlinie zur hygienischen Beurteilung von anorganischen Materialien im Kontakt mit Trinkwasser (KTW-Leitlinie)" des Deutschen Umweltbundesamtes zu erfüllen.

Die DE 20 2010 006 308 U1 offenbart eine Schlauchleitung mit den eingangs beschriebenen Merkmalen, wobei die Schicht aus einem thermoplastischen Elastomer auf Styrolbasis (TPE-S) besteht. Dieser Schlauch ist für die Durchleitung von Trinkwasser geeignet und erfüllt die DVGW-Richtlinien gemäß Arbeitsblatt W 270 zur Trinkwasserverordnung von 2001. TPE-S sind thermoplastische Elastomer-Compounds, die in der Regel auf eine Polypropylen-Matrix (Homopolymer, Block-Copolymer, Random-Copolymer) basieren, in die der hydrierte Styrol-Dien-Block-Copolymer-Kautschuk (z.B. SEBS, SEPS), sowie ggf. paraffinisches Weißöl, Füllstoffe und Stabilisatoren eingebettet werden. Trinkwasserkonforme Materialien müssen allerdings ölfrei sein, um die erforderlichen Hygienestandards zu erfüllen. Zur Erringung einer ausreichenden Flexibilität muss ferner der Kautschukanteil sehr hoch dosiert sein, was wirtschaftliche Nachteile hat, aber auch verarbeitungstechnisch ungünstig ist (z.B. hohe Klebrigkeit).

Die EP 2 032 352 B1 offenbart einen gattungsgemäßen weichmacherfreien Schlauch zum Transport von Nahrungsmittel-Flüssigkeiten, welche ebenfalls eine Innenschicht mit einem thermoplastischen Elastomer sowie eine Armierung offenbart. Aus der US2013/131647 A1 ist ein unarmierter Schlauch für medizinische Anwendungen bekannt.

Der Erfindung liegt die Aufgabe zugrunde, eine Schlauchleitung mit den eingangs beschriebenen Merkmalen anzugeben, die kostengünstig und gleichzeitig fertigungstechnisch einfach herstellbar ist.

Erfindungsgemäß wird die Aufgabe durch die Merkmale des Patentanspruchs 1 gelöst. Gemäß dem Stand der Technik ist als thermoplastische Komponente in einem thermoplastischen Elastomer Polypropylen weit verbreitet. Durch die erfindungsgemäße Verwendung eines Polyethylen-Materials in der thermoplastischen Komponente kann nun der Anteil der elastomeren Komponente im thermoplastischen Elastomer überraschenderweise bei gleichbleibender Shore-Häre A reduziert werden, wodurch sich verarbeitungstechnische und auch wirtschaftliche Vorteile ergeben. Darüber hinaus ist Polyethylen ein günstigerer Rohstoff als Polypropylen, wodurch zusätzliche Vorteile entstehen. Das Polyethylen weist eine geringere Steifigkeit als Polypropylen auf und erlaubt es daher, den Anteil der elastomeren Komponente im thermoplastischen Elastomer bei gleichbleibender Weichheit bzw. Shore-Härte A zu reduzieren. Gleichzeitig kann überraschenderweise mit dem erfindungsgemäßen Schlauch die DVGW-Richtlinie gemäß Arbeitsblatt W 270 zur Trinkwasserverordnung 2001 erfüllt werden. Im Ergebnis erhält man einen gemäß der KTW-Prüfleitlinie des Bundesumweltamtes entsprechend zertifizierbaren Schlauch, der zum Transport von Trinkwasser geeignet ist und hierbei gleichzeitig sehr kostengünstig und verfahrenstechnisch einfach produzierbar ist. Aufgrund des erfindungsgemäß vergleichsweise niedrigen Anteils an der elastomeren Komponente im thermoplastischen Elastomer weist das Material in der Regel keine bzw. nur eine sehr geringe Klebrigkeit auf, wie sie beispielsweise bei einem TPE mit hohem SEBS-Anteil nachteilig festzustellen ist.

Erfindungsgemäß ist das Polyethylen-Material ein PE-Copolymer. Das PE-Copolymer enthält als Co-Monomer Vinylacetat und / oder Methylacrylat und / oder Ethylacrylat und / oder Butylacrylat und / oder Glycidylmethacrylat. Das Polyethylen-Material kann auch ein PE-LLD (LLDPE) sein. PP-LLD steht für ein lineares Polyethylen niederer Dichte, dessen Polymermolekül nur kurze Verzweigungen aufweist. Diese Verzweigungen werden durch Copolymerisation von Ethen mit höheren α-Olefinen (typischerweise Buten, Hexen oder Octen) hergestellt. PE-LLD weist eine Dichte von 0,87 bis 0,94 g / cm³ auf.

Erfindungsgemäß enthält die thermoplastische Komponente mindestens 30 Gewichts-Prozent, z.B. mindestens 40 Gewichts-Prozent, vorzugsweise mindestens 50 Gewichts-Prozent, insbesondere mindestens 70 Gewichts-Prozent Polyethylen-Material. Insbesondere kann die thermoplastische Komponente auch aus dem Polyethylen-Material bestehen. Generell liegt es aber auch im Rahmen der Erfindung, dass die thermoplastische Komponente neben Polyethylen weitere polyolefinische, thermoplastische Polymere enthält. Erfindungsgemäß enthält die erfindungsgemäße Schicht der Schlauchleitung mindestens 50 Gewichts-Prozent, vorzugsweise mindestens 70 Gewichts-Prozent thermoplastisches Elastomer. Insbesondere kann die Innenschicht im Rahmen der Erfindung auch aus dem thermoplastischen Elastomer bestehen, wobei hierdurch die Zumischung von Stabilisatoren und sonstigen Additiven in geringen Mengen, z.B. < 5 Gew.-%, insbesondere < 3 Gew.-%, nicht ausgeschlossen wird. Gemäß einer bevorzugten Ausführungsform der Erfindung ist die thermoplastische Komponente des thermoplastischen Elastomers frei von Polypropylen, wobei damit ein PP-Gehalt von weniger als 0,1 Gew.-% in der thermoplastischen Komponente gemeint ist.

Wie bereits erläutert, ermöglicht die erfindungsgemäße Lehre den Einsatz eines vergleichsweise hohen Gewichtsanteils der thermoplastischen Komponente, da diese selbst bereits über eine relativ hohe Flexibilität verfügt. Erfindungsgemäß weist die thermoplastische Komponente daher bezogen auf die Gesamtmasse des thermoplastischen Elastomers einen Gewichtsanteil von mindestens 30 %, z.B. mindestens 40 %, vorzugsweise mindestens 50 % auf.

Für die elastomere Komponente können unterschiedlichen Materialien zum Einsatz kommen. Im Rahmen der Erfindung werden jedoch insbesondere elastomere Komponenten verwendet, welche Styrol, insbesondere SEBS und / oder SEPS, enthalten. Vorzugsweise besteht die elastomere Komponente aus SEBS und / oder SEPS. Zweckmäßigerweise ist die erfindungsgemäße Schicht der Schlauchleitung frei von Weichmacher, wobei damit ein Weichmachergehalt von weniger als 0,1 Gew.-% im Material der Schicht gemeint ist.

Optional weist die Schlauchleitung zusätzlich eine, vorzugsweise polymere, Außenschicht auf. Zweckmäßigerweise dient diese Außenschicht zum Schutz einer auf die Schicht aufgebrachten Armierungsschicht, wobei die Armierungsschicht Filamente aufweist. Diese Filamente sind gewickelt und / oder geflochten, z.B. diagonal.

Im Rahmen der Erfindung liegt es insbesondere, dass die Schicht der Innenschicht entspricht, also das thermoplastische Elastomer der Schicht unmittelbar von dem zu transportierenden Fluid beaufschlagt wird.

Die Schicht weist zweckmäßigerweise eine Härte Shore A von 55 bis 75, vorzugsweise 60 bis 70, auf. Wie bereits erläutert, ist erfindungsgemäß ein lediglich vergleichsweise geringer Anteil an elastomerer Komponente erforderlich, um diese relativ niedrige Shore-Härte, welche mit einer entsprechend hohen Flexibilität der Schlauchleitung einhergeht, einstellen zu können. Die Härte Shore A wird zweckmäßigerweise gemäß der Norm DIN EN ISO 868 gemessen.

Erfindungsgemäß wird die Schlauchleitung für den Transport von Trinkwasser verwendet. Hierbei kommt es auf eine sehr geringe bzw. praktisch nicht vorhandene Kontamination des zu transportierenden Fluids durch die Schlauchleitung an. In diesem Zusammenhang wird nochmals auf die bereits genannte DVGW-Richtlinie gemäß Arbeitsblatt W 270 sowie die KTW-Prüfleitlinie des Umweltbundesamtes zur Trinkwasserverordnung 2001 verwiesen. Bei Trinkwasserschläuchen kann es sich beispielsweise um Zulaufschläuche für Geschirrspüler, Waschmaschinen oder auch kommerzielle Trinkwasserautomaten handeln. Ein besonders bevorzugtes Anwendungsgebiet sind ferner Schläuche im Sanitärbereich, beispielsweise zum Einzug in Panzerschläuche, Brauseschläuche allgemein und Sanitärarmaturenanschlussschläuche. Erfindungsgemäße Schläuche können insbesondere auch im Schausteller- und Caravan-Bereich eingesetzt werden, ebenso wie für nicht ortsfeste Trinkwasseranlagen, z.B. auf Schiffen, in Flugzeugen oder sonstigen Verkehrsmitteln.

Nicht zur Erfindung gehörendes Beispiel:
Für eine Schicht werden zwei Materialien hergestellt. Material A gemäß dem Stand der Technik ist ein TPE mit 5 ÷ 20 Gew.-% PP, 30 ÷ 50 Gew.-% SEBS, 28 ÷ 63 Gew.-% weitere polyolefinische, thermoplastische Polymere sowie ca. 2 Gew.-% Stabilisatoren und sonstige Additive. Das erfindungsgemäße Material B besteht aus demselben Material, jedoch mit 5 ÷ 20 Gew.-% PE-Homopolymer (PE-HD) an Stelle des PP in Material A. Bei Vergleichsmessungen erhält man folgende Werte:

| | Härte Shore A | σ 20% [MPa] | σ 50% [MPa] | σ 100% [MPa] | σ 200% [MPa] | RF [MPa] | RD [%] |
|---|---|---|---|---|---|---|---|
| Material A | 72 | 2,2 | 3,4 | 4,3 | 5,1 | 7,4 | 580 |
| Material B | 62 | 1,0 | 1,5 | 1,8 | 2,2 | 12,5 | 823 |

In der Tabelle bezeichnet σ die Spannung, die bei einer Dehnung des Materials um x % gemessen wird, RF die Reißfestigkeit und RD die Reißdehnung, also die Länge der Materialprobe unmittelbar vor dem Reißen im Verhältnis zur Ursprungslänge der Probe im unbelasteten Zustand.

Im Folgenden wird die Erfindung anhand einer lediglich ein Ausführungsbeispiel darstellenden Zeichnung erläutert. Es zeigen schematisch:
- Fig. 1: eine nicht zur Erfindung gehörende Schlauchleitung in einer Querschnittsdarstellung und
- Fig. 2: eine Ausführungsform der Erfindung.

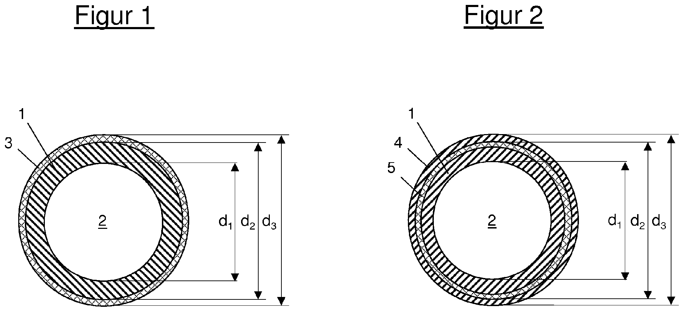

Im nicht zur Erfindung gehörenden Ausführungsbeispiel gemäß der Fig. 1 wird eine Schlauchleitung im Querschnitt dargestellt, wobei diese Schlauchleitung lediglich aus einer einzigen Schicht 1 besteht. Diese bildet entsprechend auch die Innenschicht der Schlauchleitung. Diese Innenschicht 1 ist dadurch definiert, dass deren innere Oberfläche einen freien Querschnitt 2 für den Transport eines zu führenden Fluids, beispielsweise Trinkwasser, begrenzt. Die Schicht 1 enthält ein thermoplastisches Elastomer (TPE) mit einer thermoplastischen Komponente (TK) einerseits und einer elastomeren Komponente (EK) andererseits. Die thermoplastische Komponente (TK) enthält ein Polyethylen. Im Ausführungsbeispiel gemäß der Fig. 1 ist das Polyethylen-Material ein Polyetylen-Homopolymer, z.B. ein PE-HD, PE-MD oder PE-LD. Die thermoplastische Komponente besteht im Ausführungsbeispiel vollständig aus dem Polyethylen-Homopolymer. Ebenso besteht im Ausführungsbeispiel die Innenschicht 1 vollständig aus dem thermoplastischen Elastomer (TPE). Das Polyethylen-Homopolymer, welches die thermoplastische Komponente (TK) darstellt, besitzt bezogen auf die Gesamtmasse des thermoplastischen Elastomers (TPE) der Innenschicht einen Gewichtsanteil von mindestens 50 %. Die elastomere Komponente besteht im Ausführungsbeispiel aus SEBS.

Wie bereits erwähnt, besteht im Ausführungsbeispiel gemäß Fig. 1 die Schlauchleitung lediglich aus der Innenschicht 1. In Fig. 1 ist zusätzlich eine die Schlauchleitung umgebende Armierung 3, z.B. in Form eines Geflechts, dargestellt. Die Armierung kann aus Metall aber auch aus Kunststoff bestehen, wobei die Armierung 3 im Nachgang mit einer Kunststoffummantelung, z.B. aus PVC (nicht näher dargestellt), versehen sein kann. Bei der Montage wird die aus der Schicht 1 bestehende Schlauchleitung in die Armierung 3 eingeschoben. Derartige Schlauchanordnungen werden im Allgemeinen als Panzerschläuche bezeichnet und finden insbesondere im Sanitärbereich, z.B. für Armaturen oder als Brauseschlauch, oder auch beim Anschluss von Haushaltsgeräten, z.B. Spülmaschinen, Waschmaschinen etc., Anwendung. Zu diesem Zweck werden an den beiden Enden der Schlauchleitung zweckmäßigerweise Anschlussstücke (nicht dargestellt) angebracht. Die in der Figur dargestellten Durchmesser d₁ des freien Querschnitts 2, d₂ des Außendurchmessers der Schlauchleitung bzw. Innenschicht und d₃ des Außendurchmessers der Armierung betragen zweckmäßigerweise d₁ = 8,5 ÷ 12,5 mm, d₂ = 7,4 ÷ 16,5 mm, d₃ = 8,2 ÷ 18,1 mm.

Beim erfindungsgemäßen Ausführungsbeispiel gemäß Fig. 2 ist neben der Schicht 1 aus thermoplastischem Elastomer (TPE), welche die Innenschicht darstellt, eine Außenschicht 4 sowie eine zwischen diesen beiden Schichten 1, 4 angeordnete Armierungsschicht 5 vorgesehen, die zur mechanischen, also drucktechnischen Verstärkung dient. Auch hier ist die Armierungsschicht 5 als ein Geflecht aus einzelnen Filamenten ausgebildet, wobei die Filamente aus Metall, Kunststoff, Carbon oder auch aus anderen Materialien bestehen können. Zum Schutz der Armierungsschicht 5 ist die Außenschicht 4 vorgesehen, welche ebenfalls aus einem polymeren Material besteht, beispielsweise aus PVC. Bei der in der Fig. 2 dargestellte Schlauchleitung besteht das Polyethylen-Material der thermoplastischen Komponente (TK) der Innenschicht 1 aus einem PE-Copolymer. Im Ausführungsbeispiel ist das Co-Monomer ein Vinylacetat. Derartige Schläuche können beispielsweise im Zusammenhang mit der Trinkwasserversorgung in Caravans oder aber auch ebenfalls als Brauseschlauch im Sanitärbereich eingesetzt werden. Beim Ausführungsbeispiel gemäß Fig. 2 befinden sich die einzelnen Durchmesser analog im Bereich d₁ = 8,5 ÷ 12,5 mm, d₂ = 7,4 ÷ 16,5 mm, d₃ = 8,2 ÷ 18,1 mm.

In beiden Ausführungsbeispielen gemäß den Fig. 1 und 2 weist die Innenschicht 1 eine Shore-Härte A von 60 bis 70 auf.

## Patentansprüche

1. Verwendung einer Schlauchleitung zum Transport von Trinkwasser,
- wobei die Schlauchleitung eine Innenschicht (1) aufweist, deren innere Oberfläche einen freien Querschnitt für den Transport eines zu führenden Fluids begrenzt,
- wobei die Innenschicht (1) zu mindestens 50 Gew.% ein thermoplastisches Elastomer (TPE) mit einer thermoplastischen Komponente (TK) und einer elastomeren Komponente (EK) enthält,
- wobei optional zusätzlich eine Außenschicht (4) vorgesehen ist,
- wobei zwischen Innenschicht (1) und Außenschicht (4) eine Armierungsschicht (5) vorgesehen ist,
- wobei die Armierungsschicht (5) gewickelte und/oder geflochtene Filamente aufweist,
- wobei die thermoplastische Komponente (TK) bezogen auf die Gesamtmasse des thermoplastischen Elastomers (TPE) einen Gewichtsanteil von mindestens 30 % aufweist, und
- wobei die thermoplastische Komponente (TK) mindestens 30 Gew.-% Polyethylen-Material enthält,
**dadurch gekennzeichnet,**
- **dass** das Polyethylen-Material ein PE-Copolymer ist und
- **dass** das PE-Copolymer ein PE-LLD ist oder als Co-Monomer Vinylacetat und / oder Methylacrylat und / oder Ethylacrylat und / oder Butylacrylat und / oder Glycidilmethacrylat enthält.

2. Verwendung nach Anspruch 1, **dadurch gekennzeichnet, dass** die thermoplastische Komponente (TK) mindestens 70 Gew.-% Polyethylen-Material enthält.

3. Verwendung nach Anspruch 1 oder 2, **dadurch gekennzeichnet, dass** die thermoplastische Komponente (TK) frei von Polypropylen ist.

4. Verwendung nach einem der Ansprüche 1 bis 3, **dadurch gekennzeichnet, dass** die Innenschicht (1) mindestens 70 Gew.-% thermoplastisches Elastomer (TPE) enthält.

5. Verwendung nach einem der Ansprüche 1 bis 4, **dadurch gekennzeichnet, dass** die thermoplastische Komponente (TK) bezogen auf die Gesamtmasse des thermoplastischen Elastomers (TPE) einen Gewichtsanteil von mindestens 50 % aufweist.

6. Verwendung nach einem der Ansprüche 1 bis 5, **dadurch gekennzeichnet, dass** die elastomere Komponente Styrol, insbesondere SEBS und/oder SEPS enthält, und vorzugsweise aus SEBS und/oder SEPS besteht.

7. Verwendung nach einem der Ansprüche 1 bis 6, **dadurch gekennzeichnet, dass** die Innenschicht (1) eine Härte Shore A von 55 bis 75, vorzugsweise 60 bis 70, aufweist.

## Claims

1. Use of a hose line for transporting drinking water,
- wherein the hose line comprises an inner layer (1), the inner surface of which defines a free cross section for transporting a fluid to be conducted,
- wherein the inner layer (1) contains at least 50 wt.% of a thermoplastic elastomer (TPE) having a thermoplastic component (TC) and an elastomer component (EC),
- wherein an outer layer (4) optionally additionally is provided,
- wherein a reinforcing layer (5) is provided between the inner layer (1) and the outer layer (4),
- wherein the reinforcing layer (5) comprises wound and/or braided filaments,
- wherein the thermoplastic component (TC) has a proportion by weight of at least 30% based on the total mass of the thermoplastic elastomer (TPE), and
- wherein the thermoplastic component (TC) contains at least 30 wt.% polyethylene material,
**characterised in that**
- the polyethylene material is a PE copolymer and
- the PE copolymer is an LLDPE or contains vinyl acetate and/or methyl acrylate and/or ethyl acrylate and/or butyl acrylate and/or glycidyl methacrylate as a co-monomer.

2. Use according to claim 1, **characterised in that** the thermoplastic component (TC) contains at least 70 wt.% polyethylene material.

3. Use according to claim 1 or 2, **characterised in that** the thermoplastic component (TC) is free of polypropylene.

4. Use according to any of claims 1 to 3, **characterised in that** the inner layer (1) contains at least 70 wt.% thermoplastic elastomer (TPE).

5. Use according to any of claims 1 to 4, **characterised in that** the thermoplastic component (TC) has a proportion by weight of at least 50% based on the total mass of the thermoplastic elastomer (TPE).

6. Use according to any of claims 1 to 5, **characterised in that** the elastomer component contains styrene, in particular SEBS and/or SEPS, and preferably consists of SEBS and/or SEPS.

7. Use according to any of claims 1 to 6, **characterised in that** the inner layer (1) has a Shore A hardness of from 55 to 75, preferably of from 60 to 70.

## Revendications

1. Utilisation d'un conduit tubulaire flexible pour le transport d'eau potable,
- dans laquelle le conduit tubulaire flexible présente une couche intérieure (1), dont la surface intérieure délimite une section transversale libre pour le transport d'un fluide à guider,
- dans laquelle la couche intérieure (1) contient à hauteur d'au moins 50 % en poids un élastomère thermoplastique (TPE) avec une composante thermoplastique (TK) et une composante élastomère (EK),
- dans laquelle en option une couche extérieure (4) est prévue en supplément,
- dans laquelle une couche de blindage (5) est prévue entre la couche intérieure (1) et la couche extérieure (4),
- dans laquelle la couche de blindage (5) présente des filaments enroulés et/ou tressés,
- dans laquelle la composante thermoplastique (TK) présente, par rapport au poids total de l'élastomère thermoplastique (TPE), une proportion en poids d'au moins 30 % et
- dans laquelle la composante thermoplastique (TK) contient au moins 30 % en poids de matériau en polyéthylène,
**caractérisée en ce**
- **que** le matériau en polyéthylène est un copolymère en PE et
- **que** le copolymère en PE est un PE-LLD (polyéthylène basse densité linéaire) ou contient en tant que co-monomère de l'acétate de vinyle et/ou du méthacrylate et/ou de l'acrylate d'éthyle et/ou de l'acrylate de butyle et/ou du méthacrylate de glycidyle.

2. Utilisation selon la revendication 1, **caractérisée en ce que** la composante thermoplastique (TK) contient au moins 70 % en poids de matériau en polyéthylène.

3. Utilisation selon la revendication 1 ou 2, **caractérisée en ce que** la composante thermoplastique (TK) est sans polypropylène.

4. Utilisation selon l'une quelconque des revendications 1 à 3, **caractérisée en ce que** la couche intérieure (1) contient au moins 70 % en poids d'élastomère thermoplastique (TPE).

5. Utilisation selon l'une quelconque des revendications 1 à 4, **caractérisée en ce que** la composante thermoplastique (TK) présente par rapport au poids total de l'élastomère thermoplastique (TPE) une proportion en poids d'au moins 50 %.

6. Utilisation selon l'une quelconque des revendications 1 à 5, **caractérisée en ce que** la composante élastomère contient du styrène, en particulier du SEBS [styrène-éthylène-butylène-styrène] et/ou du SEPS [styrène-éthylène-propylène-styrène], et consiste de préférence en SEBS et/ou en SEPS.

7. Utilisation selon l'une quelconque des revendications 1 à 6, **caractérisée en ce que** la couche intérieure (1) présente une dureté Shore A de 55 à 75, de préférence de 60 à 70.
